Europäisches Patentamt

European Patent Office

Office européen des brevets

(19)

(11) Publication number: **0 251 802 B1**

# EUROPEAN PATENT SPECIFICATION

(45) Date of publication of patent specification: **08.05.91**   (51) Int. Cl.⁵: **B26D 5/20, B29C 63/02, B65H 35/06**

(21) Application number: **87305876.2**

(22) Date of filing: **02.07.87**

(54) Cutting mechanism.

(30) Priority: **02.07.86 JP 155871/86**

(43) Date of publication of application:
**07.01.88 Bulletin 88/01**

(45) Publication of the grant of the patent:
**08.05.91 Bulletin 91/19**

(84) Designated Contracting States:
**CH DE FR GB IT LI**

(56) References cited:
**DE-A- 3 002 490**

**PATENT ABSTRACTS OF JAPAN, unexamined applications, M section, vol. 10, no. 191, July 4, 1986; THE PATENT OFFICE JAPANESE GOVERNMENT page 51 M 495**

(73) Proprietor: **HAMAMATSU MANUFACTORY, LTD.**
**1707 Azatateno Omotejionji**
**Iwatsuki City Saitama Prefecture(JP)**

(72) Inventor: **Hamamatsu, Kozo**
**4-36-8 Asakusa Taitoku**
**Tokyo(JP)**

(74) Representative: **Davies, Christopher Robert et al**
**Frank B. Dehn & Co. Imperial House 15-19 Kingsway**
**London WC2B 6UZ(GB)**

## Description

This invention relates to a cutting mechanism for a leaf-type laminating apparatus.

In conventional leaf-type laminating apparatus, individual sheets of sheet material, such as paper, are laminated with a continuous thin film of material. As a result the individual sheets are interconnected by the thin film, and the film must be cut to separate the sheets. One known way of separating the individual sheets is to make a small incision, about 1 cm across, on one edge of the film and then apply a tension to the sheet material, e.g. by means of a roller, to cause the film to tear at the incision. This method is only applicable however to certain specific types of film.

There is further known from JP-A-6135933 (Japanese patent application 158077/1984) a cutting mechanism in which a plurality of blades are driven on a chain transversely to the direction of the paper feed to cut the film at a fixed angle. The mechanism is able to cut cleanly all types of film without cutting the paper itself. This document is the basis of the preamble of claims 1 and 6.

This prior mechanism suffers however from the disadvantage that the chain bearing the cutting blades must be stopped and started repeatedly as the sheets are fed to the cutting mechanism. This continual stopping and starting prevents a high speed operation, and furthermore puts considerable strain on the chain causing it to tend to stretch undesirably.

According to the invention there is provided a cutting mechanism for a laminating apparatus, comprising means for feeding a succession of sheets of sheet material laminated by a continuous film, a cutting blade arranged on a chain for transverse motion relative to the feeding direction of the sheet material to cut said film, said chain being driven by a drive motor through a clutch brake, and means for synchronizing said transverse motion of the cutting blade with the sheet material feed whereby said sheets may be separated into individual laminated sheets, characterised in that said synchronising means is adapted so as to cause said chain to rotate continuously while separating a succession of said interconnected sheets into individual laminated sheets, said drive motor driving the chain through a timing belt and also driving a synchronising controlling transformer which comprises part of said synchronising means and generates a signal indicative of the rotation of said chain, and in that means are provided for stopping said chain so that the blade is in a position for cutting said film when said sheets are fed to the cutting mechanism, said synchronizing means further comprising means associated with said feeding means for generating a signal indicative of the position of said feeding means in a feeding cycle, means for comparing said signals, and means for adjusting the speed of said chain in response to the result of said comparison, such that the said signals are in phase.

By means of this arrangement, at least in its preferred forms, high-speed reliable operation can be achieved since the cutting blade moves continuously and does not need to be stopped and started every time the film is to be cut.

Preferably means are provided for introducing a phase difference between these signals, and to allow for different sizes of sheet material the angle of the path of the cutting blade relative to the feeding direction may be adjusted.

Viewed from another broad aspect the present invention provides a method of dividing a succession of sheets of sheet material that have been interconnected by a laminate of continuous film material comprising, feeding said sheets in succession in a feeding direction, moving a cutting blade transversely to said feeding direction to cut said film, and synchronizing the transverse motion of the cutting blade with the feeding of said sheets to separate said sheets into individual laminated sheets, said blade being mounted on a said chain which is driven by a drive motor through a clutch brake, characterised in that chain is rotated continuously during the separation of a plurality of said interconnected sheets into individual laminated sheets, in that said drive motor drives the chain through a timing belt and also drives a synchronising controlling transformer which comprises part of said synchronising means and generates a signal indicative of the rotation of said chain, and in that means are provided for stopping said chain so that the blade is in a position for cutting said film when said sheets are fed to the cutting mechanism, said synchronization being achieved by comparing signals generated indicative of the movement of said blade and the feeding of said sheets, and adjusting the speed of said blade in response to the result of said comparison so as to maintain said signals with the same phase relationship.

Some embodiments of the invention will now be described by way of example and with reference to the accompanying drawings, in which:-

Figure 1 is an overall schematic view of a leaf-type laminating apparatus,

Figures 2(a) and 2(b) are plan and side views respectively of a known cutting mechanism,

Figure 2(c) is a view of a sensor in a known cutting mechanism,

Figures 3(a) and 3(b) show in detail how a cutting blade may be mounted to a chain,

Figures 4(a) - (c) are plan and side views of a cutting mechanism according to an embodiment of the invention,

Figures 5(a) and 5(b) show how the cutting mechanism may be used to cut different sizes of paper, and

Figure 6 is a block diagram showing the interrelationship of the various elements.

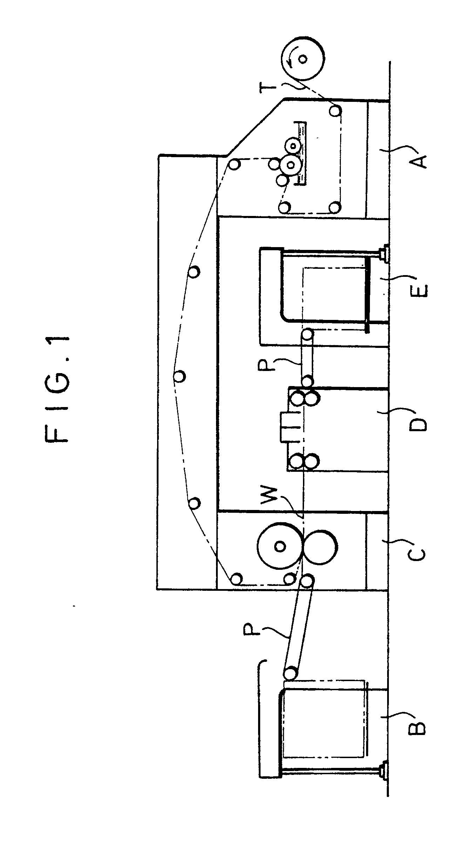

Referring firstly to Fig. 1, continuous thin film T is supplied from a storage roller into a section A in which any desired painting or decoration is applied to the film T. If necessary a dryer (not shown) may be provided to dry the film and remove solvents, such as water, alcohol or thinners, after the film has passed through the painting section A. The film T is then fed via rollers to the other end of the laminating apparatus, at which end sheets of paper are supplied from a stack B by means of a delivery conveyor P. The paper sheets and the film T are laminated together between a pair of hot rolls C and the resulting laminate W is fed to a cutting mechanism D in which the film is cut to provide separate laminated sheets of paper which are delivered by a conveyor P to a stack E.

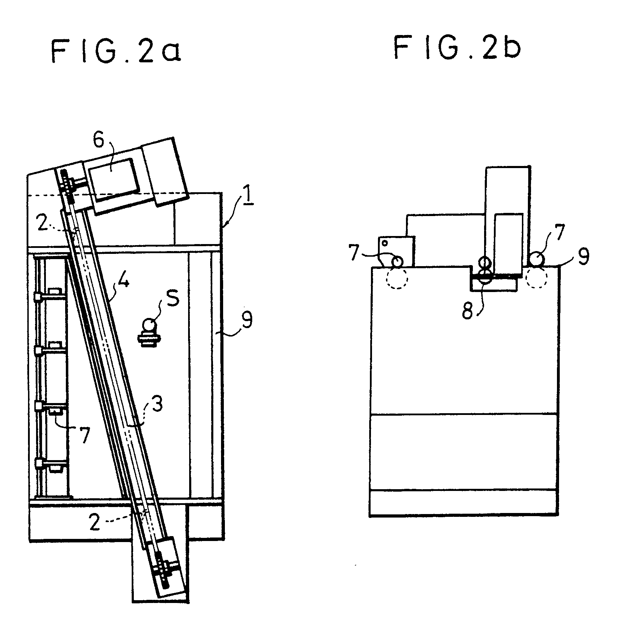

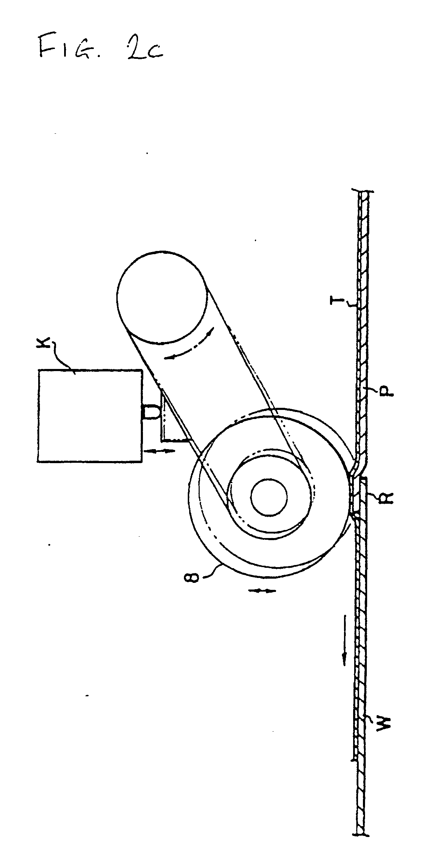

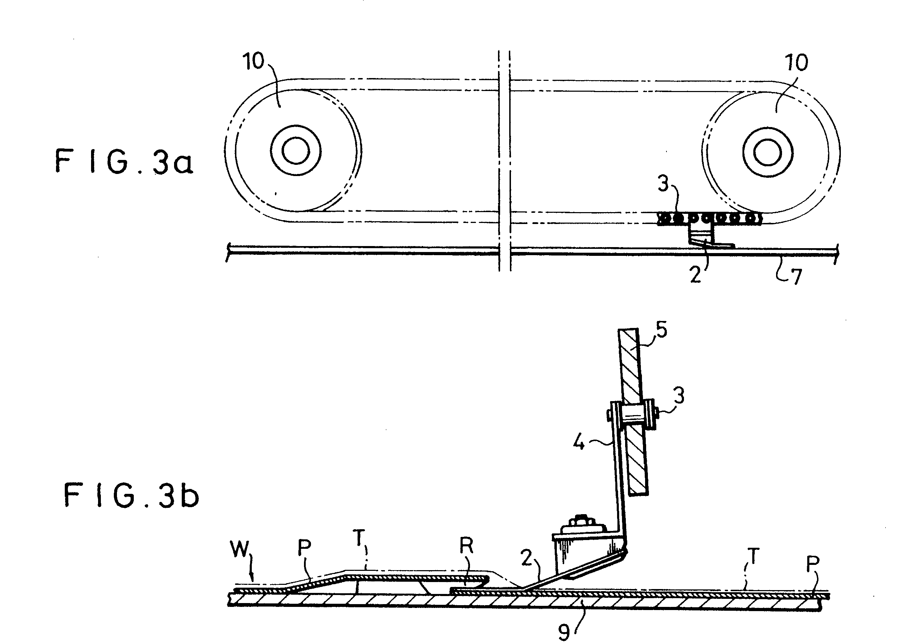

Figs. 2(a), 2(b), 3(a) and 3(b) show a conventional cutting mechanism. A chain 3 is driven by a motor and clutch brake 6 through a pair of chain wheels 10. Secured to the chain 3 are a plurality of cutting blades 2, and the chain is shielded by a chain shield 4. As the chain rotates the blades are moved transversely across the paper at a fixed angle to cut the film. The laminated paper sheets are fed through the cutting mechanism over a chromium-plated base plate 9 by rollers 7,8. Each cutting blade 2 is secured to the chain 3 through a bracket formed with the chain guide.

The upper of the pair of paper feeding rollers 8 forms parts of a sensor S which, as is shown in Fig. 2(c), detects an overlapping region R of two laminated paper sheets and through a linear deflection meter K causes the motor 6 to operate to drive the chain 3 and cause the blades 2 to cut the film T in the overlapping region R, as is shown in Fig. 3(b). Thus the chain 3 is caused to rotate, carrying the cutting blades (2), every time sensor S detects an overlapping region R. This continual stopping and starting of the chain prevents high speed operation of the cutting mechanism and causes detrimental wear of the chain.

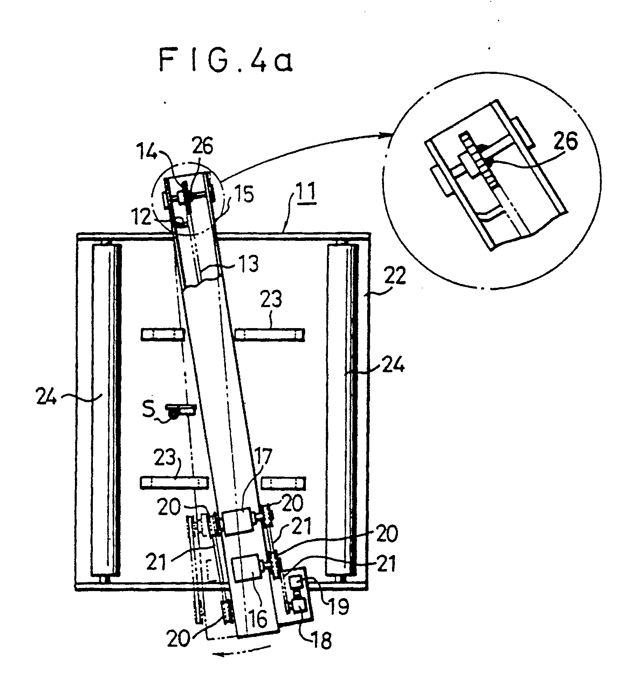

Figs. 4(a)-4(c) show a cutting mechanism according to an embodiment of the present invention. A chain 13 carries a cutting blade 12 of resilient thin steel and is driven by motor 16 through a first pulley 20 and timing belt 21 arrangement, clutch brake 17, a second pulley 20 and timing belt 21 arrangement, and a chain driving wheel, the latter being not shown but similar to the second chain wheel 14. The chain 13 is provided with a shield 15. The complete chain 13, chain driving mechanism 14,16,17,20,21 and the shield 15 are pivotable about a vertical shaft 26 provided adjacent the chain wheel 14 for reasons to be described below.

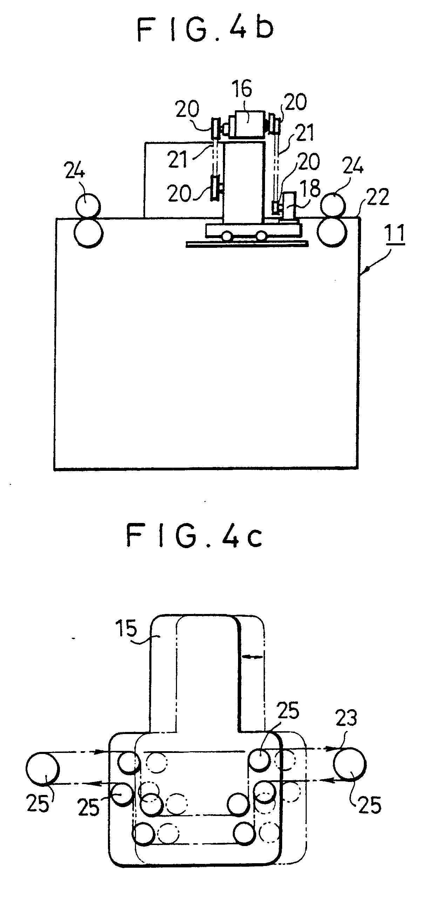

The paper sheets are fed to and from the cutting mechanism by paper feeding rollers 24. Within the cutting mechanism the paper sheets are carried by belts 23 driven by rollers 25. As is shown in Fig. 4(c) some of the rollers 25 are movable with the chain 13 as it is pivoted about shaft 26.

As is shown in Figs. 4(a) and 4(b) the motor 16 is also connected, through a reduction gear 18, to a synchronizing controlling transformer 19. Similarly a rotating shaft of the paper feeder (not shown) is connected to a synchronizing transmitter and by the use of suitable control means, to be described below, the feeding of paper sheets to the cutting mechanism and the rotation of the chain 13 (and hence blade 12) may be synchrozined.

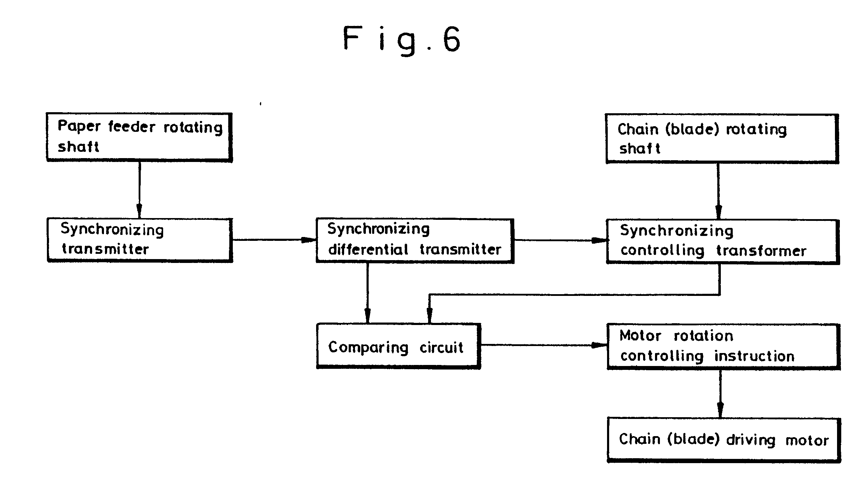

The manner in which the paper feeding and the chain rotation are synchronized is shown in Fig. 6. The synchronizing transmitter and the synchronizing controlling transformer produce signals indicative of the rotation of the paper feeder shaft and the chain rotating shaft, respectively, which are compared in a comparing circuit. The output of the comparing circuit is used to generate an instruction for controlling the speed of rotation of the chain driving motor. The chain driving motor is adjusted so that the signals from the synchronizing controlling transformer and the synchronizing transmitter are in phase, though a constant phase difference may be introduced if desired by means of an adjustable differential transmitter.

By means of the synchronizing control apparatus the rotation of the chain may be adjusted so that the blade completes one full rotation every time a sheet of paper is fed to the cutting mechanism. Thus when the chain driving motor and the paper feeder are properly synchronized, the chain can rotate continuously and every time a new piece of paper is fed to the cutting mechanism the blade fitted on the chain is in a position to cut the film.

The cutting mechanism is provided with a sensor S, similar to that known from the prior art, which detects when no paper is fed to the cutting mechanism and sends a signal to stop the rotation of the chain and blade. When the chain is stopped, the blade is stopped in a position ready to begin a new cycle when more paper is fed to the cutting mechanism. When the apparatus is started an overlapped part of the paper laminated is detected and the clutch is connected to permit the chain to be rotated.

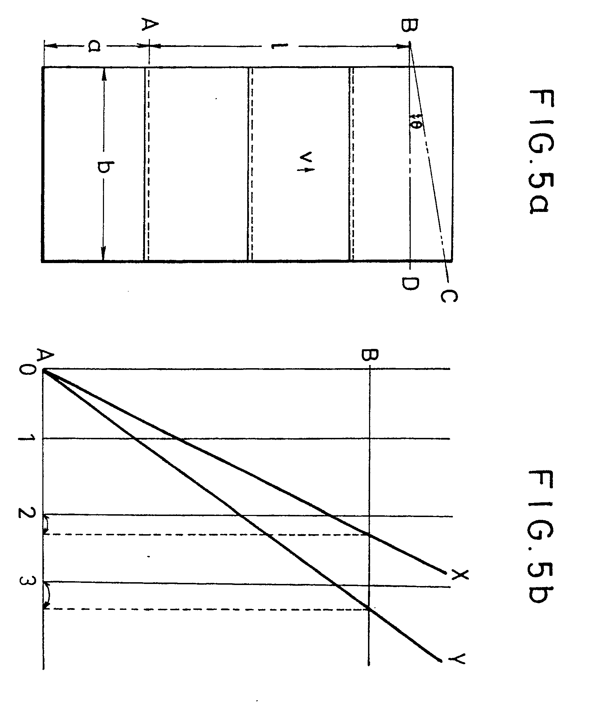

When the paper feed and the rotation of the chain are synchronized, the angle of the chain rotation to the direction of the paper feed must be adjusted depending on the size of the paper. For example, from a consideration of Fig. 5(a) it will be seen that if V represents the line velocity of the paper feed, a = the length of each individual sheet, and $\ell$ is the length of the periphery of the chain, n = the number of sheets fed in unit time, and v = the velocity of the blade, the following equations will be satisfied;

$$V = n \times a$$
$$v = n \times \ell$$

and for the film to be cut along the line between two sheets of paper,

$$V = v \sin \theta$$

where $\sin \theta = \frac{a}{\ell}$

Therefore if the speeds of the paper and the chain are constant, and the size of the paper is changed, the angle $\theta$ must be adjusted. This adjustment is achieved by pivoting the chain mechanism about the shaft 26 as described above.

When the size of the paper is changed it will be necessary to vary the phase of the chain motor. For example, if the line speed V is constant the time taken for a sheet of paper to travel from point A to point B (see Fig 5(a)) will be constant, however if one imagines two different sizes of paper, X and Y, large and small respectively, it will be appreciated that in moving from A to B paper X will take, say, 2+n rotations of the paper feeder shaft, while paper Y will take, say, 3+m and there is is a phase change of the paper feeding shaft of n-m. Accordingly if the blade is to be able to cut the film between two sheets, the phase difference between the chain driving motor and the paper feeder must be adjusted by means of the synchronizing differential transmitter.

At the point A, when the prospect of the paper feeder lowers, the paper will start. In the case, the timing will be in a fixed position in one cycle of the paper feeder. This position and the position of the blade of the chain will be always kept in a fixed relation.

The paper feeding roll and the paper feeding belt are rotated through the same driving motor and the velocity is electrically controlled so as to always be indentical with the peripheral velocity (line velocity) of the hot roll of the apparatus.

While the cutting mechanism described above has only a single cutting blade mounted on the chain, it will be appreciated that more than one blade could be fitted if desired.

## Claims

1. A cutting mechanism for a laminating apparatus, comprising means for feeding a succession of sheets of sheet material laminated by a continuous film, a cutting blade arranged (12) on a chain (13) for transverse motion relative to the feeding direction of the sheet material to cut said film, said chain being driven by a drive motor (16) through a clutch brake (17), and means for synchronizing said transverse motion of the cutting blade (12) with the sheet material feed whereby said sheets may be separated into individual laminated sheets, characterised in that said synchronising means is adapted so as to cause said chain (13) to rotate continuously while separating a succession of said interconnected sheets into individual laminated sheets, said drive motor driving the chain (13) through a timing belt (21) and also driving a synchronising controlling transformer (19) which comprises part of said synchronising means and generates a signal indicative of the rotation of said chain (13), and in that means (5) are provided for stopping said chain (13) so that the blade (12) is in a position for cutting said film when said sheets are fed to the cutting mechanism, said synchronizing means further comprising means associated with said feeding means for generating a signal indicative of the position of said feeding means in a feeding cycle, means for comparing said signals, and means for adjusting the speed of said chain (13) in response to the result of said comparison, such that the said signals are in phase.

2. A cutting mechanism according to claim 1 wherein means are provided for introducing a phase difference between said signals.

3. A cutting mechanism as claimed in claim 2 wherein said means for introducing a phase diference comprises a synchronised differential transmitter.

4. A cutting mechanism according to any preceding claim wherein the angle of the path of said cutting blade (12) relative to the feeding direction of said sheet material may be adjusted to allow for different sizes of sheet material.

5. A cutting mechanism according to claim 4 wherein said sheet material is passed through said cutting mechanism on a pair of belts (23), said belts (23) being movable with said cutting blade (12) when the angle of the path of said blade is adjusted.

6. A method of dividing a succession of sheets of sheet material that have been interconnected by a laminate of continuous film material comprising, feeding said sheets in succession in a feeding direction, moving a cutting blade (12) transversely to said feeding direction to cut said film, and synchronizing the transverse motion of the cutting blade (12) with the feeding of said sheets to separate said sheets into individual laminated sheets, said blade being mounted on a said chain which is driven by a drive motor (16) through a clutch brake (6), characterised in that chain (13) is rotated continuously during the separation of a plurality of said interconnected sheets into individual laminated sheets, in that said drive motor drives the chain (13) through a timing belt (21) and also drives a synchronising controlling transformer (19) which comprises part of said synchronising means and generates a signal indicative of the rotation of said chain (13), and in that means (5) are provided for stopping said chain (13) so that the blade (12) is in a position for cutting said film when said sheets are fed to the cutting mechanism, said synchronization being achieved by comparing signals generated indicative of the movement of said blade (12) and the feeding of said sheets, and adjusting the speed of said blade (12) in response to the result of said comparison so as to maintain said signals with the same phase relationship.

7. A method according to claim 6 wherein the phase difference between said signals may be adjusted to allow for different sizes of sheet material.

8. A method according to claim 7 wherein the angle of the path of said blade (12) relative to the feeding direction is adjusted to allow for different sizes of sheet material.

**Revendications**

1. Mécanisme de coupe destiné à un appareil de stratification, comprenant des moyens d'avance successive de feuilles d'un matériau en feuille stratifié par un film continu, une lame de coupe (12) montée sur une chaîne (13) pour se déplacer transversalement par rapport au sens de l'avance du matériau en feuille pour couper ledit film, ladite chaîne étant entraînée par un moteur d'entraînement (16) par l'intermédiaire d'un accouplement (17) et des moyens de synchronisation dudit déplacement transversal de la lame de coupe (12) par rapport au matériau en feuille, moyennant quoi lesdites feuilles peuvent être séparées en feuilles individuelles stratifiées, caractérisé en ce que lesdits moyens de synchronisation sont conçus de telle manière qu'ils permettent une rotation continue de ladite chaîne (13) tout en séparant une succession de dites feuilles reliées les unes aux autres en feuilles individuelles stratifiées, ledit moteur d'entraînement entraînant la chaîne (13) par l'intermédiaire d'une courroie de distribution et entraînant également un transformateur de commande de synchronisation (19) qui comprend une partie desdits moyens de synchronisation et génère un signal indicatif de la rotation de ladite chaîne (13) et en ce que ces moyens (5) sont conçus pour arrêter ladite chaîne de sorte que la lame (12) soit en position pour couper ledit film lorsque lesdites feuilles alimentent le mécanisme de coupe, lesdits moyens de synchronisation comprenant en outre des moyens associés ausdits moyens d'avance pour générer un signal indicateur de la position desdits moyens d'avance dans un cycle d'alimentation, des moyens de comparaison desdits signaux, et des moyens de réglage de la vitesse de ladite chaîne (13) suivant les résultats de ladite comparaison, de sorte que lesdits signaux soient en phase.

2. Mécanisme de coupe selon la revendication 1 dans lequel sont fournis des moyens d'introduction d'une différence de phase entre lesdits signaux.

3. Mécanisme de coupe selon la revendication 2 dans lequel lesdits moyens d'introduction d'une différence de phase comprennent un transmetteur différentiel synchronisé.

4. Mécanisme de coupe selon l'une quelconque des revendications précédentes dans lequel l'angle du trajet de ladite lame de coupe (12) par rapport au sens de l'avance dudit matériau en feuille peut être réglé pour admettre différents formats de matériau en feuille.

5. Mécanisme de coupe selon la revendication 4 dans lequel ledit matériau en feuille passe dans ledit mécanisme de coupe sur une paire de courroies (23), lesdites courroies (23) étant mobiles avec ladite lame de coupe (12) lorsque l'angle de passage de ladite lame est réglé.

6. Procédé de séparation d'une succession de feuilles d'un matériau en feuille qui ont été reliées les unes aux autres par stratification d'un film continu comprenant l'alimentation desdites feuilles successives dans un sens d'avance, le déplacement transversal d'une lame de coupe (12) par rapport au sens de l'avance pour couper ledit film, et la synchronisation du mouvement transversal de la lame de coupe (12) par rapport auxdites feuilles pour séparer lesdites feuilles en feuilles individuelles stratifiées, ladite lame étant montée sur une chaîne qui est entraînée par un moteur d'entraînement (16) par l'intermédiaire d'un accouplement (6), caractérisé en ce que cette chaîne (13) tourne en permanence pendant la séparation d'un certain nombre de feuilles reliées les unes aux autres en feuilles individuelles stratifiées, en ce que ledit moteur d'entraînement entraîne la chaîne (13) par l'intermédiaire d'une courroie de distribution (21) et entraîne également un transformateur de commande de synchronisation (19) qui comprend une partie desdits moyens de synchronisation et génère un signal indicateur de la rotation de ladite chaîne (13), et en ce que des moyens (5) sont prévus pour arrêter ladite chaîne (13) de sorte que la lame (12) soit en position pour couper ledit film lorsque les feuilles arrivent dans le mécanisme de coupe, ladite synchronisation s'effectuant par comparaison des signaux indicateurs des mouvements de ladite lame (12) et de l'avance desdites feuilles, et par le réglage de la vitesse de ladite lame (12) en fonction des résultats de ladite comparaison de manière à maintenir lesdits signaux dans le même rapport de phase.

7. Procédé selon la revendication 6 dans lequel une différence de phase entre lesdits signaux peut être introduite pour traiter différents formats de matériau de feuille.

8. Procédé selon la revendication 7 dans lequel l'angle de passage de ladite lame (12) par rapport au sens de l'avance est réglé pour permettre de traiter différents formats de matériau de feuille.

**Ansprüche**

1. Schneidemechanismus für eine Laminiermaschine mit einer Vorrichtung zum Zuführen von einer Folge von Schichten aus mit einem kontinuierlichen Film laminierten Schichtmaterial, eine auf einer Kette (13) für eine transversale Bewegung relativ zur Zuführrichtung des Schichtmaterials angeordneten Schneideklinge (12) zum Schneiden des Films, wobei die Kette über eine Kupplung (17) von einem Motor (16) angetrieben wird, und einer Vorrichtung zum Synchronisieren der transversalen Bewegung der Schneideklinge (12) mit der Schichtmaterialzuführung, wobei die Schichten in einzelne, laminierte Schichten getrennt werden können, dadurch gekennzeichnet, daß die Synchronisationsvorrichtung geeignet ist, zu bewirken, daß die Kette (13) sich kontinuierlich dreht, während sie eine Folge der verbundenen Schichten in einzelne, laminierte Schichten trennt, wobei der Antriebsmotor, der die Kette (13) über einen Synchronriemen (21) antreibt, auch einen synchronisierenden Steuertransformer (19), der einen Teil der Synchronisationsvorrichtung umfaßt und ein die Drehung der Kette (13) anzeigendes Signal erzeugt, antreibt, und daß Vorrichtungen (5) zum Anhalten der Kette (13) vorgesehen sind, so daß die Klinge in einer Stellung zum Schneiden des Films ist, wenn die Schichten in den Schneidemechanismus eingeführt werden, wobei die Synchronisationsvorrichtung außerdem Vorrichtungen, die mit der Zuführvorrichtung zum Erzeugen eines die Stellung der Zuführvorrichtung in einem Zuführzyklus anzeigenden Signals verbunden sind, Vorrichtungen zum Vergleichen der Signale und Vorrichtungen zum Einstellen der Geschwindigkeit der Kette (13) in Abhängigkeit von dem Ergebnis des Vergleichs, so daß die Signale in Phase sind, umfaßt.

2. Schneidemechanismus nach Anspruch 1, wobei Vorrichtungen zum Einführen einer Phasenverschiebung zwischen den Signalen eingerichtet sind.

3. Schneidemechanismus nach Anspruch 2, wobei die Vorrichtungen zum Einführen einer Phasenverschiebung einen synchronisierten, differentiellen Transmitter umfassen.

4. Schneidemechanismus nach einem der vorhergehenden Ansprüche, wobei der Winkel zwischen dem Weg der Schneideklinge (12) und der Zuführrichtung des Schichtmaterials eingestellt werden kann, um verschiedene Größen des Schichtmaterials zu berücksichtigen.

5. Schneidemechanismus nach Anspruch 4, wobei das Schichtmaterial auf einem Riemenpaar (23) durch den Schneidemechanismus geführt wird, wobei die Riemen (23) mit der Schneideklinge (12) beweglich sind, wenn der Winkel des Klingenweges eingestellt ist.

6. Verfahren zum Trennen einer Folge von Schichten von Schichtmaterial, die aus einem laminierten, kontinuierlichen Filmmaterial zusammengefügt sind, wobei das Verfahren umfaßt: Zuführen der Schichten in einer Folge in einer Zuführrichtung, Bewegen einer Schneideklinge (12) transversal relativ zur Zuführrichtung zum Schneiden des Films, und Synchronisieren der transversalen Bewegung der Schneideklinge (12) mit der Schichtmaterialzuführung, um die Schichten in einzelne, laminierte Schichten zu trennen, wobei die Klinge auf einer Kette montiert ist, die von einem Antriebsmotor (16) über eine Kupplung (6) angetrieben wird, dadurch gekennzeichnet, daß die die Kette (13) kontinuierlich gedreht wird, während der Trennung einer Folge der verbundenen Schichten in einzelne, laminierte Schichten, daß der Antriebsmotor die Kette (13) über einen Synchronriemen (21) antreibt und auch einen synchronisierenden Steuertransformer (19), der einen Teil der Synchronisationsvorrichtung umfaßt und ein die Drehung der Kette (13) anzeigendes Signal erzeugt, antreibt, und daß Vorrichtungen (5) zum Anhalten der Kette (13) vorgesehen sind, so daß die Klinge in einer Stellung zum Schneiden des Films ist, wenn die Schichten in den Schneidemechanismus eingeführt werden, wobei die Synchronisation erreicht wird durch Vergleichen von erzeugten Signalen, die die Bewegung der Klinge (12) und die Zuführung der Schichten anzeigen, und durch Einstellen der Geschwindigkeit der Klinge (12) in Abhängigkeit von dem Ergebnis des Vergleichs, um die Signale in derselben Phasenbeziehung zu halten.

7. Verfahren nach Anspruch 6, wobei der Phasenunterschied zwischen den Signalen eingestellt werden kann, um verschiedene Größen des Schichtmaterials zu berücksichtigen.

8. Verfahren nach Anspruch 7, wobei der Winkel zwischen der Klinge (12) und der Zuführrichtung eingestellt wird, um verschiedene Größen des Schichtmaterials zu berücksichtigen.

FIG.1

EP 0 251 802 B1

FIG.2a

FIG.2b

FIG. 2c

FIG.3a

10                                    10

3

2        7

5

3

4

FIG.3b

W  P  T        R        2        T   P

9

EP 0 251 802 B1

# F I G . 4 a

# FIG. 4b

# FIG. 4c

FIG.5a

FIG.5b

Fig.6

Block diagram:

Paper feeder rotating shaft → Synchronizing transmitter → Synchronizing differential transmitter → Synchronizing controlling transformer ← Chain (blade) rotating shaft

Synchronizing differential transmitter → Comparing circuit → Motor rotation controlling instruction → Chain (blade) driving motor